# EUROPEAN PATENT SPECIFICATION

(11) **EP 2 201 079 B1**
(45) Date of publication and mention of the grant of the patent: **23.08.2017**
(21) Application number: 07838253.8
(22) Date of filing: 14.09.2007
(51) Int. Cl.: C09K 5/00

(54) **THERMALLY CONDUCTIVE COMPOSITION**
WÄRMELEITFÄHIGE ZUSAMMENSETZUNG
COMPOSITION THERMIQUEMENT CONDUCTRICE

(43) Date of publication of application: 30.06.2010
(73) Proprietor: Henkel AG & Co. KGaA, 40589 Düsseldorf (DE)
(72) Inventor: ZHANG, Yimin, Ballwin, MO 63021 (US); XIAO, Allison, Y., Belle Mead, NJ 08502 (US)
(86) International application number: PCT/US2007/020018
(87) International publication number: WO 2009/035439

(56) References cited:
- WO-A1-00/21900
- WO-A1-2006/019751
- WO-A2-2004/015002
- JP-A- 2002 030 223
- US-A1- 2005 228 093
- US-A1- 2005 228 093
- US-A1- 2006 127 422
- US-B1- 6 432 320

## Description

### FIELD OF THE INVENTION

This invention relates to a thermally conductive composition that is utilized to transfer heat from a heat-generating electronic device to a cold sink, which absorbs and dissipates the transferred heat.

### BACKGROUND OF THE INVENTION

Electronic devices, such as those containing semiconductors, typically generate a significant amount of heat during operation. To cool the semiconductors, a thermally conductive composition is used to provide an intimate contact between the semiconductor and a cold sink to facilitate the heat transfer out of the semiconductor and to the cold sink. Thermally conductive compositions are used to improve the heat flux between hot devices/substrates and cold sinks/spreaders. Thermally conductive compositions may consist of thermally conductive fillers and a resin binder. As the concentration of thermally conductive fillers increase, the thermal conductivity of the system improves. However, increasing filler loading can sacrifice performance characteristics (e.g. adhesion, flexibility) or application requirements (e.g. paste viscosity, handling characteristics of film compositions).

Thermally conductive compositions with a low viscosity and good flowability are desirable for the more powerful and denser semiconductor chips currently being designed. Low viscosity thermally conductive compositions are desirable for fragile chips and for the solder bonds that attach the chips to a substrate, because of the minimal force necessary to apply the composition to the semiconductor chip and the resulting decrease in the risk of compromising the integrity of the chip.

WO2004/015002 relates to a thermoconductive silicone elastomer compositions that contains the thermoconductive filler whose surface has been treated or coated with a fatty acid and thereafter has also been treated or coated with an epoxy-functional compound and a curing catalyst for epoxy resins. Furthermore, '002 encompasses a semiconductor device afforded by coating a semiconductor chip with the thermoconductive silicone elastomer composition and curing.

US2006/0127422 relates to a low viscosity filler boron nitride agglomerate particles having a generally spherical shape bound together by an organic binder and to a process for producing a BN powder composition of spherically shaped boron nitride agglomerated particles having a treated surface layer which controls its viscosity.

WO00/21900 relates to a prepreg for an electronic support, wherein the prepreg comprises (a) a polymeric matrix material; and (b) a fabric comprising a strand comprising glass fibers, at least a portion of the fabric having a coating, which is compatible with the polymeric matrix material, and wherein the prepreg has a drill trip percent wear of no greater than about 32 percent, and a chip load of 0.001 with a 0.46 mm.

US2005/0228093 relates to a thermoconductive composition comprising wax and spherical boron nitride, wherein said spherical boron nitride has an average particle size of 20 to 100 [mu]m.

There continues to be a need in the art for a thermally conductive composition with good thermal conductivity and good flowability. The present invention addresses this need.

### SUMMARY OF THE INVENTION

It has now been discovered that physical treatment of the fillers with a surface area modifying agent by coating the outer layer and filling the internal pores of the fillers improves the thermal conductivity of compositions containing these treated fillers compared to those compositions that contain fillers that are not so treated with the surface area modifying agent. The compositions prepared with physically treated fillers are particularly useful in packaging products such as electronic devices and electronic components. The fillers suitable for use in the present invention may be mixtures of fillers, and/or composite fillers, capable of providing the desired properties of thermal conductivity, electrical conductivity, thermal insulation, electrical insulation, sound insulation, light absorption, light reflectivity, or combinations of such properties.

This invention is directed to a thermally conductive composition comprising a filler and a resin binder, wherein the filler is physically treated with a surface area modifying agent, wherein the surface area modifying agent has a melting point of 25°C to 150°C and, wherein the surface area modifying agent is selected from the group consisting of ethylene oxide-propylene oxide copolymers with -OH functional groups, ethylene oxide-propylene oxide-ethylene oxide copolymers with -OH functional groups, propylene oxide-ethylene oxide- propylene oxide copolymers with -OH functional groups, polyethylene glycols, polyethylene oxide, polypropylene oxide, and mixtures thereof, and wherein the physical treatment of the fillers is conducted by coating the outer layers of the fillers and/or filling the thermal pores of the fillers with the surface area modifying agent.

In a further embodiment, the surface area modifying agent has a melting point between 30°C to 80°C.

In still another embodiment, the physical treatment of fillers is conducted by coating the outer layers of the fillers and/or filling the internal pores of the fillers with a surface area modifying agent. Exemplary surface area modifying agents are ethylene oxide-propylene oxide (EO-PO) copolymers terminated with -OH functional groups, ethylene oxide-propylene oxide-ethylene oxide (EO-PO-EO) copolymers terminated with -OH functional groups, propylene oxide-ethylene oxide- propylene oxide (PO-EO-PO) copolymers terminated with -OH functional groups, polyethylene glycols, polyethylene oxide, polypropylene oxide, wax, and copolymers and blends.

Another embodiment of the composition is directed to a physically treated agglomerate of boron nitride.

In a further embodiment of the composition, the agglomerate of boron nitride is physically treated with a polyethylene oxide homopolymer or copolymer.

In another embodiment, the composition further optionally comprises one or more of the following: curing agent, curing accelerator, catalyst, adhesion promoter, reactive diluent, non-reactive diluent, surfactant, wetting agent, antioxidant, thixotrope, reinforcement composition, silane, titanate, wax, phenol formaldehyde, silane functional perfluoroether, phosphate functional perfluoroether, air release agent, flow additive, adhesion promoter, rheology modifier, defoamer and spacer bead.

In another embodiment, this invention is a method for physically treating filler comprising dissolving a surface area modifying agent in a solvent, dispersing the untreated fillers in the solvent-surface area modifying agent solution, evaporating the solvent, and drying the fillers that has now been physically treated with a surface area modifying agent.

Yet another embodiment provides articles manufactured using the thermally conductive composition of the invention.

Another aspect of the present invention provides an electronic device containing a heat-generating component, a cold sink and a thermally conductive composition.

Still another aspect is directed to a process of sealing and/or making or forming an intimate contact between a semiconductor and a cold sink. These processes comprise applying the thermally conductive composition of the invention onto a substrate and curing/drying the thermally conductive composition to form a pad, grease, phase change composition, film, paste, adhesives and the like. Application can be, for example, by dispensing, stencil, screen rotogravure or flexo printing.

### BRIEF DESCRIPTION OF THE DRAWING

Figure 1 is a Raman Spectroscopy of boron nitride, surface area modifying agent (Pluronic F38) and surface area modified boron nitride.
Figure 2 is the Scanning Electronic Microscopy figures of BN size and agglomeration before and after the physical treatment.
Figure 3 shows the relationship of viscosity vs. filler loading of BN and surface area modified BN.

### DETAILED DESCRIPTION OF THE PREFERRED EMBODIMENTS

It has been discovered that control of the morphology of the fillers, of the internal voids/pores of the fillers, and of the compatibility of the filler surface and the resin, can control the viscosity and the overall thermal conductivity of the composition.

The filler of the invention comprises porous filler with rough surfaces. Physical treatment of the filler introduces the surface area modifying agent into the pores of the filler and onto the surface of the filler, thereby decreasing the overall surface area of the filler. Compositions comprising the resultant physically treated filler exhibit lower viscosity than compositions comprising the same loading of non-physically treated filler. Additionally, the compositions comprising the physically treated fillers have improved thermal conductivity as compared to compositions comprising fillers that are not so physically treated.

It is understood in the art that physical treatment is different than chemical treatment. Unlike chemical treatment, physical treatment does not create or break new chemical bonds.

The thermally conductive compositions of this invention comprise physically treated thermally conductive fillers. These fillers may either be electrically conductive or non-conductive. Typically, fillers preferred for physical treatment are those that have a rough surface and/or a porous structure. The untreated fillers may comprise any suitable thermally conductive material, including boron nitride, aluminum nitride, copper, silver, aluminum, magnesium, brass, gold, nickel, alumina, zinc oxide, magnesium oxides, iron oxide, silver oxide, copper oxide, metal-coated organic particles, silver plated nickel, silver plated copper, silver plated aluminum, silver plated glass, silver flake, silver powder, carbon black, graphite, diamond, carbon nanotube, silica and mixtures thereof. Preferably, the untreated fillers are boron nitride. More preferably the untreated fillers are agglomerated boron nitride, available under the trade name PTX60 from Momentive Performance Inc., Ohio or PCTL7MHF from Saint Gobain Ceramics, New York.

The surface area modifying agent is used to control the morphology of the filler shape and/or fill the internal voids/pores of the fillers. The introduction of surface area modifying agent decreases the overall surface area of the filler.

The surface area modifying agent is a solid at room temperature and has a melting temperature below curing temperature of the resin. The melting point of the surface area modifying agent is from 25°C to 150°C. In another embodiment, the melting point of the surface area modifying agent is from 30°C to 80°C. The low melting point enables filler-filler contacts at elevated temperatures for improved thermal conductivity. The solid-to-liquid phase change at the melting temperature of the surface area modifying agent can absorb the heat generated from the device while temporarily maintaining low interfacial temperature.

The surface area modifying agent for the filler is selected from the group consisting of ethylene oxide-propylene oxide copolymers with -OH functional groups, ethylene oxide-propylene oxide-ethylene oxide copolymers with -OH functional groups, propylene oxide-ethylene oxide- propylene oxide copolymers with -OH functional groups, polyethylene glycols, polyethylene oxide, polypropylene oxide, and mixtures thereof. Non-limiting examples of polyalkene oxide include polyethylene oxide homopolymers and copolymers.

Preferred surface area modifying agents are ethylene oxide-propylene oxide (EO-PO) copolymers with -OH functional groups, EO-PO-EO copolymers with -OH functional groups, PO-EO-PO copolymers with - OH functional groups, polyethylene glycols, polyethylene oxide, polypropylene oxide, wax, and mixtures thereof.

The surface area modifying agent is included in the composition in amount of from 0.1 % to 30 % by the total weight of the filler. More preferably, the surface area modifying agent is in a range from about 0.5 % to 20 % by the total weight of the filler.

In a further embodiment, the surface area modifying agent is soluble in a solvent. Exemplary solvents are water miscible and volatile. Non-limiting solvents include water, low molecular weight alcohols, such as ethanol, methanol, n-propanol, isopropanol; and low molecular weight ketones, such as acetone and MEK. However, the surface area modifying agent is not soluble in the resin binder.

There are several methods to physically treat the fillers. One non-limiting example is to dissolve the surface area modifying agent in a solvent, disperse the fillers in the solution of surface area modifying agent-solvent, evaporate the solvent and dry the physically treated fillers. In another non-limiting example, the physical treatment of fillers can be effected by dissolving the surface area modifying agent in water, followed by placing the fillers and the solution of surface area modifying agent-solvent in a fluid bed coater. It should be understood that other conventional methods may be used to physically treat the fillers.

The physically treated filler mean size is from 0.01 microns to 1000 microns. In another embodiment, the physically treated filler mean size is from 1 to 300 microns. In a further embodiment, the physically treated filler mean size is from 10 to 200 microns.

The fillers may be discrete in size, multimodal, or have a broad size distribution.

The physically treated fillers comprise in the range of 10 % to 40 % by volume of the total composition, preferably in the range of 15 to 35 % by volume.

The resin binder of the thermally conductive composition may be selected from any resins currently used throughout the industry. In general, the resin binder is selected from the group consisting of epoxies, silicones, epoxide terminated silicones, maleimides, bismaleimides, vinyl ethers, vinyl esters, itaconates, fumarates, polyimides, cyanate esters, fluorosilicones, polyurethanes, acrylate monomers and polymers, fatty esters, maleates, isocyanates, polyolefines, norbornenes, episulfides, benzoxanzines, styrenics, oxazolines, amines, phenolics, allyl compounds polyesters and mixtures thereof.

In one embodiment, the resin is selected from the group consisting of flexible epoxy, silicones, epoxide terminated silicones and bismaleimides. Flexible epoxy may be synthesized according to US Patent 5,717,054. Silicone is commercially available from Nusil, under the trade name of PLY7500. Epoxide terminated silicones is commercially available from Hans Chemie, under the trade name of Albiflex. Bismaleimides may be synthesized according to US Patents 6,300,456, 6,307,001 or 6,441,121.

The resin may be cured with any of the known curing agents including, for example, imidazoles, peroxides and amines, free radical initiator and metal catalysts. Non-limiting examples of curing agents include blocked imidazoles, 2-ethyl-4-methylimidazole, 2-methylimidazole, 2-phenylimidazole, 2-phenyl-4-methylimidazole, 2-undecylimidazole, 1-benzyl-2-methylimidazole, 1-cyanoethyl-2-methylimidazole, 1-cyanoethyl-2-ethyl-4-methylimidazole, dicyanediamine, or mixtures thereof.

It should be understood that a wide range of cure conditions are possible, that is, the time, temperature and pressure applied during cure, and these can be determined by the practitioner for the chosen resin without undue experimentation.

Various additives that may be included are diluents (reactive and non-reacting), antioxidants, plasticizers, stabilizers, dispersing agents, coloring agents, tackifiers, adhesives, corrosion inhibitors, catalysts, adhesion promoters, surface active agents, wetting agents, thixotropes, reinforcement compositions, silanes, titanates, wax, phenol formaldehyde, silane functional perfluoroether, phosphate functional perfluoroether, air release agents, flow additives, adhesion promoters, rheology modifiers, defoamers, spacer beads and mixtures thereof.

The use of physically treated fillers increases the overall thermal conductivity of the composition. The use of the physically treated fillers can increase the thermal conductivity of the composition by at least 5 %, up to above 50 % when compared to compositions with non-physically treated fillers at a similar viscosity.

The thermally conductive composition of the present invention may be utilized with virtually any heat-generating component for which it is desired to dissipate the heat. In particular, the thermally conductive composition is useful for aiding in the dissipation of heat from heat-generating components in semiconductor devices. In such devices, the thermally conductive composition forms a layer between the heat-generating component and the cold sink and transfers the heat to be dissipated to the cold sink. The thermally conductive composition may also be used in a device containing a heat spreader. In such a device, a layer of thermally conductive composition may be placed between the heat-generating component and the heat spreader and a second layer, which is usually thicker than the first layer, may be placed between the heat spreader and the cold sink.

The thermally conductive composition may be formed into a pad, grease, phase change compositions, film, paste, adhesives, and the like. The thermally conductive composition may be employed in any consumer product with a heat-generating device and heat-dissipating device. Applications include microprocessor packaging, bearing housings, heat-exchanger applications such as heat sinks for microprocessors and integrated circuit chips, plastic ball grid array packages, quad flat packs, and other common surface-mounted integrated circuit packages, and the like, particularly applications demanding a high thermal conductivity. Encompassed are computers and computer equipment, e.g., printers, fax machines, scanners and the like, and household appliances, and personal electronic devices, such as cameras, CD-players, DVD-players, cassette tape recorders and the like. Such articles typically comprise electronic components which have been adhered by such electrically conductive composition

The invention is further illustrated by the following non-limiting examples:

### Examples

### Example 1: Physical treatment of Filler with Surface area modifying agent

Two different methods of physically treating fillers with a surface area modifying agent have been described.

### Example 1A: Solution Method

Nine grams of Pluronic F38 (EO-PO block copolymers with -OH terminations, Mw=4700g/mol, available from BASF) was dissolved into 200mL of water. Into the Pluronic F38-water solution, 91 g of boron nitride fillers (PTX60, available from Momentive Performance Inc., OH) were dispersed. The water was then evaporated with constant stirring and vacuum overnight. The resultant dry powder weighed 100 g.

### Example 1B: Fluidization Method

Nine grams of Pluronic F38 (EO-PO block copolymers with -OH terminations, Mw=4700g/mol, available from BASF) was dissolved into 45mL of water. The Pluronic F38-water solution and 91 g of boron nitride fillers (PTX60) were placed in a fluid bed coater (Model MFL.01 by Vector Corporation, IA) to physically treat the fillers. The resultant dry powder weighed 100g.

### Example 2: Removal of surface area modifying agent

Five grams of the physically treated BN using Example 1A method was dispersed in 100 g of water, stirred overnight and then centrifuged. The supernate was transferred to an empty container and dried in air. The dried supernate was collected as 0.79g. This indicated that more than 90% of the surface modifier can be recovered by one wash. Infrared spectroscopy (Nicolet Magna-IR 560 Spectrometer) confirmed that the dried supernate was Pluronic F38. The reversibility of the process indicated that there was no chemical reaction between the BN powder and the surface area modifying agent.

### Example 3: Raman Spectroscopy

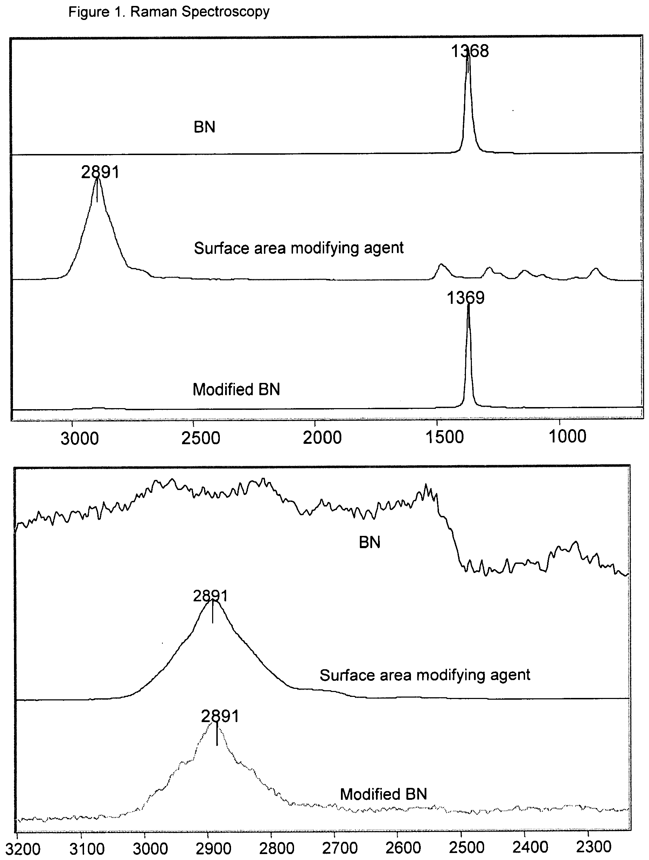

Raman spectroscopy (Nicolet Almega XR by Thermal Fisher Scientific, MA) of untreated BN, surface modifier (Pluronic F38) and physically treated BN with Pluronic F38 are shown in Figure 1. As shown in Figure 1, the characteristic peak of BN at 2891 cm-1 did not shift after the physical treatment the filler with Pluronic F38, indicating that Pluronic F38 did not chemically react with BN.

### Example 4: Surface area changes

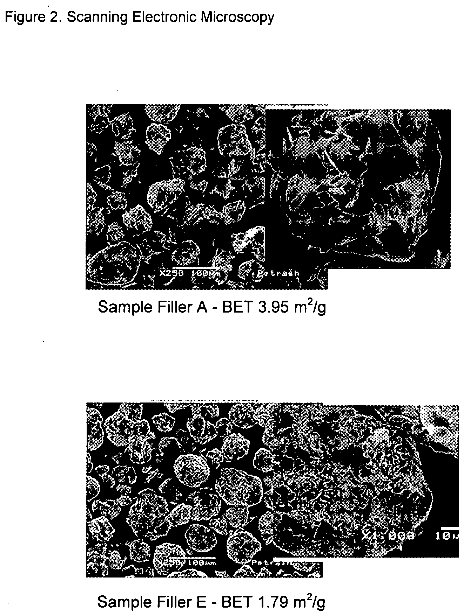

Various amounts of surface area modifying agents were used to treat BN (PTX60) to result in different surface areas, listed in Table 1. The surface area of the unmodified and modified BN agglomerates was measured with Brunauer, Emmett and Teller (BET) method (Micromeritics TriStar 3000 Automated Physisorption Analyzer by Micromeritics, GA). As shown in Table 1, there is a direct correlation between the amount of agent and the resultant surface area. Figure 2 (Scanning Electronic Microscopy JSM-6380LV by JEOL USA, MA) showed that the filler size and agglomeration remained the same before and after the modification, indicating the decrease of surface area is attributed to filling the pores and/or smoothing out the rough exterior of the filler.

**Table 1. Surface Area of Fillers**

| Sample | Surface area modifying agent | % Surface area modifying agent | Method of Physical Treatment | SA (m²/g) |
|---|---|---|---|---|
| A | none | 0 | None | 3.95 |
| B | Pluronics F38^{a} | 6 | Fluidization | 2.06 |
| C | Pluronics F38^{a} | 9 | Solution | 1.95 |
| D | Pluronics F68^{b} | 9 | Fluidization | 1.73 |
| E | Pluronics F38^{a} | 9 | Solution | 1.79 |
| F | Pluronics F38^{a} | 17 | Solution | 1.14 |
| G | Pluronics F68^{b} | 17 | Solution | 1.17 |
| H | PEG^{c} | 17 | Solution | 1.49 |
| I | PEO^{d} | 17 | Solution | 1.35 |

| | | | | |
|---|---|---|---|---|
| ^{a} EO-PO copolymer, 4700g/mol, mp 48°C available from BASF, NJ ^{b} EO-PO copolymer, 8400g/mol, mp 52°C available from BASF, NJ ^{c} Polyethylene glycol, 4,600g/mol, mp 62°C available from Sigma Aldrich. ^{d} Polyethylene oxide, 50,000g/mol, mp 65°C available from Sigma Aldrich. | | | | |

As shown in Table 1, the surface area of boron nitride treated fillers was reduced after the physical modification.

Another BN agglomerate, PCTL7MHF (available from Saint Gobain), was physically treated to reduce the surface area. The BET surface area values of untreated and 9% Pluronics F38 treated PCTL7MHF were 2.99 and 1.58 m²/g, respectively.

### Example 5: Viscosity vs. Filler Weight Percent Loading

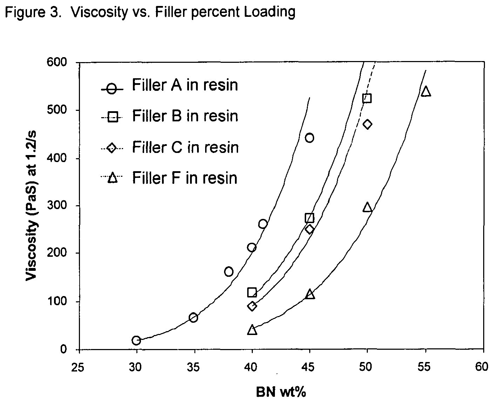

Figure 3 shows a graph of Viscosity vs. Filler Weight Percent Loading. Flexible epoxy, synthesized according to US Patent 5,717,054 and fillers (A, B, C and F, separately) were combined using a high speed mixer (FlackTek, model DAC150FVZ-K). The viscosity was measured with a strain controlled ARES rheometer (TA Instrument, model ARES-4X727802) at 25°C, with shear rate of 1.2/s.

As shown in Figure 3, as the surface area of the filler decreases, the viscosity decreased when compared to the same filler loading of higher surface area fillers.

### Example 6: Thermal conductivity

Table 2 lists the components and the thermal conductivity for various formulations at a specific viscosity. Formulations were made to achieve viscosities of 100PaS, 200PaS and 300PaS at 1.2/s shear rate using various fillers. Formulations were then crosslinked (at 150°C in conventional oven for 60 minutes) and the thermal conductivity values were measured with photo flash instrument by Netzsch (Burlington, MA).

**Table 2. Thermal Conductivity at a given Viscosity**

| Formulation | 1 | 2 | 3 | 4 |
|---|---|---|---|---|
| Resin | Epoxy^{a} | Epoxy^{a} | Epoxy^{a} | Epoxy^{a} |
| Curing agent | Imidazole^{b} | Imidazole^{b} | Imidazole^{b} | Imidazole^{b} |
| Filler | A | C | D | F |
| thermal conductivity at viscosity of 100PaS (W/m°K) | 1.3 | 1.6 | 1.7 | 1.7 |
| thermal conductivity at viscosity of 200PaS (W/m°K) | 1.4 | 2.1 | 2.0 | 2.4 |
| thermal conductivity at viscosity of 300PaS (W/m°K) | 1.7 | 2.8 | 2.8 | 2.8 |

| | | | | |
|---|---|---|---|---|
| ^{a} Flexible Epoxy synthesized according to US Patent 5,717,054 ^{b} 2-ethyl-4-methyl-imidazole, available from Aldridch | | | | |

For a given viscosity, the thermal conductivity was higher for those formulations containing fillers with lower surface area. The standard deviation of the thermal conductivity values are ± 0.1 W/m°K. The specific embodiments described herein are offered by way of example only, and the invention is to be limited only by the terms of the appended claims.

## Claims

1. A thermally conductive composition comprising a filler and a resin binder, wherein the filler is physically treated with a surface area modifying agent, wherein the surface area modifying agent has a melting point of 25°C to 150°C and, wherein the surface area modifying agent is selected from the group consisting of ethylene oxide-propylene oxide copolymers with -OH functional groups, ethylene oxide-propylene oxide-ethylene oxide copolymers with -OH functional groups, propylene oxide-ethylene oxide- propylene oxide copolymers with -OH functional groups, polyethylene glycols, polyethylene oxide, polypropylene oxide, and mixtures thereof, and wherein the physical treatment of the fillers is conducted by coating the outer layers of the fillers and/or filling the thermal pores of the fillers with the surface area modifying agent.

2. The thermally conductive composition of claim 1, wherein the filler is selected from the group consisting of boron nitride, aluminum nitride, copper, silver, aluminum, magnesium, brass, gold, nickel, alumina, zinc oxide, magnesium oxides, iron oxide, silver oxide, copper oxide, metal-coated organic particles, silver plated nickel, silver plated copper, silver plated aluminum, silver plated glass, silver flake, silver powder, carbon black, graphite, diamond, carbon nanotube, silica and mixtures thereof.

3. The thermally conductive composition of claim 2, wherein the filler is boron nitride.

4. The thermally conductive composition of claim 3, wherein the boron nitride is agglomerated or porous.

5. The thermally conductive composition of claim 4, wherein the filler has a size range from about 0.01 to about 1,000 micron.

6. The thermally conductive composition of claim 1, wherein the resin binder is selected from the group consisting of epoxies, silicones, epoxide terminated silicones, maleimides, bismaleimides, vinyl ethers, vinyl esters, itaconates, fumarates, polyimides, cyanate esters, fluorosilicones, polyurethaness, acrylate monomers and polymers, fatty esters, maleates, isocyanates, polyolefines, norbornenes, episulfides, benzoxanzines, styrenics, oxazolines, amines, phenolics, allyl compounds polyesters and mixtures thereof.

7. The thermally conductive composition of claim 1, wherein the composition is cured/dried to a pad, grease, phase change composition, film, paste or adhesive.

8. The thermally conductive composition comprising physically treated porous boron nitride with ethylene oxide/propylene oxide block copolymer, an epoxy resin and an imidazole crosslinking agent.

9. A process for making or forming an electronic device with the thermally conductive composition of claim 1 comprising: applying the thermally conductive composition by dispensing, stencil, screen rotogravure or flexo printing onto a substrate and curing and/or drying said composition.

10. An electronic device comprising the thermally conductive composition of claim 1.

11. An electronic device comprising a heat-generating component, a cold sink and the thermally conductive composition of claim 1.

## Patentansprüche

1. Wärmeleitende Zusammensetzung, umfassend einen Füllstoff und ein Harzbindemittel, wobei der Füllstoff physikalisch mit einem Oberflächenbereichsmodifizierungsmittel behandelt wird, wobei das Oberflächenbereichsmodifizierungsmittel einen Schmelzpunkt von 25 °C bis 150 °C aufweist und wobei das Oberflächenbereichsmodifizierungsmittel ausgewählt ist aus der Gruppe bestehend aus Ethylenoxid-Propylenoxid-Copolymeren mit - OH-funktionellen Gruppen, Ethylenoxid-Propylenoxid-Ethylenoxid-Copolymeren mit -OHfunktionellen Gruppen, Propylenoxid-Ethylenoxid-Propylenoxid-Copolymeren mit -OHfunktionellen Gruppen, Polyethylenglycolen, Polyethylenoxid, Polypropylenoxid und Mischungen daraus, und wobei das physikalische Behandeln der Füllstoffe durch Beschichten der Außenschichten der Füllstoffe und/oder Füllen der thermischen Poren der Füllstoffe mit dem Oberflächenbereichsmodifizierungsmittel durchgeführt wird.

2. Wärmeleitende Zusammensetzung nach Anspruch 1, wobei der Füllstoff ausgewählt ist aus der Gruppe bestehend aus Bornitrid, Aluminiumnitrid, Kupfer, Silber, Aluminium, Magnesium, Messing, Gold, Nickel, Aluminiumoxid, Zinkoxid, Magnesiumoxiden, Eisenoxid, Silberoxid, Kupferoxid, metallbeschichteten organischen Partikeln, versilbertem Nickel, versilbertem Kupfer, versilbertem Aluminium, versilbertem Glas, Silberflocken, Silberpulver, Ruß, Graphit, Diamant, Kohlenstoffnanoröhre, Siliciumdioxid und Mischungen daraus.

3. Wärmeleitende Zusammensetzung nach Anspruch 2, wobei der Füllstoff Bornitrid ist.

4. Wärmeleitende Zusammensetzung nach Anspruch 3, wobei das Bornitrid agglomeriert oder porös ist.

5. Wärmeleitende Zusammensetzung nach Anspruch 4, wobei der Füllstoff eine Größe im Bereich von etwa 0,01 bis etwa 1.000 Mikrometer aufweist.

6. Wärmeleitende Zusammensetzung nach Anspruch 1, wobei das Harzbindemittel ausgewählt ist aus der Gruppe bestehend aus Epoxidharzen, Siliconen, Epoxid-terminierten Siliconen, Maleimiden, Bismaleimiden, Vinylethern, Vinylestern, Itaconaten, Fumaraten, Polyimiden, Cyanatestern, Fluorsiliconen, Polyurethanen, Acrylatmonomeren und Polymeren, Fettsäureestern, Maleaten, Isocyanaten, Polyolefinen, Norbornenen, Episulfiden, Benzoxanzinen, Styrolen, Oxazolinen, Aminen, Phenolen, Allylverbindungen, Polyestern und Mischungen daraus.

7. Wärmeleitende Zusammensetzung nach Anspruch 1, wobei die Zusammensetzung zu einem Pad, einem Fett, einer Phasenänderungszusammensetzung, einem Film, einer Paste oder einem Klebstoff ausgehärtet/getrocknet wird.

8. Wärmeleitende Zusammensetzung, umfassend physikalisch behandeltes poröses Bornitrid mit Ethylenoxid-Propylenoxid-Blockcopolymer, ein Epoxidharz und ein Imidazol vernetzendes Mittel.

9. Vorgang zum Herstellen oder Ausbilden einer elektronischen Vorrichtung mit der wärmeleitenden Zusammensetzung nach Anspruch 1, umfassend: Auftragen der wärmeleitenden Zusammensetzung durch Ausgeben, Schablonen-, Sieb-, Rotations- oder Flexodruck auf ein Substrat und Aushärten und/oder Trocknen der Zusammensetzung.

10. Elektronisches Gerät, die wärmeleitende Zusammensetzung nach Anspruch 1 umfassend.

11. Elektronisches Gerät, eine wärmeerzeugende Komponente, einen Kühlkörper und die wärmeleitende Zusammensetzung nach Anspruch 1 umfassend.

## Revendications

1. Composition thermo-conductrice comprenant une charge et un liant de résine, la charge étant traitée physiquement avec un agent de modification de surface, l'agent de modification de surface présentant un point de fusion de 25°C à 150°C et l'agent de modification de surface étant choisi dans le groupe constitué par des copolymères oxyde d'éthylène-d'oxyde de propylène pourvus de groupes fonctionnels -OH, des copolymères oxyde d'éthylène-oxyde de propylène-oxyde d'éthylène pourvus de groupes fonctionnels -OH, des copolymères oxyde de propylène-oxyde d'éthylène-oxyde de propylène pourvus de groupes -OH, des polyéthylène-glycols, l'oxyde de polyéthylène, l'oxyde de polypropylène et leurs mélanges et le traitement physique des charges étant effectué par revêtement des couches externes des charges et/ou par remplissage des pores thermiques des charges avec l'agent de modification de surface.

2. Composition thermo-conductrice selon la revendication 1, dans laquelle la charge est choisie dans le groupe constitué par le nitrure de bore, le nitrure d'aluminium, le cuivre, l'argent, l'aluminium, le magnésium, le laiton, l'or, le nickel, l'alumine, l'oxyde de zinc, les oxydes de magnésium, l'oxyde de fer , l'oxyde d'argent, l'oxyde de cuivre, les particules organiques revêtues de métal, le nickel argenté, le cuivre argenté, l'aluminium argenté, le verre argenté, les flocons d'argent, la poudre d'argent, le noir de carbone, le graphite, le diamant, les nanotubes de carbone, la silice et leurs mélanges.

3. Composition thermo-conductrice selon la revendication 2, dans laquelle la charge est le nitrure de bore.

4. Composition thermo-conductrice selon la revendication 3, dans laquelle le nitrure de bore est aggloméré ou poreux.

5. Composition thermo-conductrice selon la revendication 4, dans laquelle la charge présente une gamme de tailles d'environ 0,01 micron à environ 1000 microns.

6. Composition thermo-conductrice selon la revendication 1, dans laquelle le liant de résine est choisi dans le groupe constitué par les résines époxy, les silicones, les silicones à terminaison époxyde, les maléimides, les bismaléimides, les éthers vinyliques, les esters vinyliques, les itaconates, les fumarates, les polyimides, les cyanates, les fluorosilicones, les polyuréthannes, les monomères et polymères d'acrylate, les esters gras, les maléates, les isocyanates, les polyoléfines, les norbornènes, les épisulfures, les benzoxanzines, les styréniques, les oxazolines, les amines, les phénoliques, les composés allyle, les polyesters et leurs mélanges.

7. Composition thermo-conductrice selon la revendication 1, dans laquelle la composition est durcie/séchée sur un tampon, une graisse, une composition de changement de phase, un film, une pâte ou un adhésif.

8. Composition thermo-conductrice comprenant du nitrure de bore poreux traité physiquement avec un copolymère à blocs oxyde d'éthylène/oxyde de propylène, une résine époxy et un agent de réticulation d'imidazole.

9. Procédé de fabrication ou de formation d'un dispositif électronique avec la composition thermo-conductrice selon la revendication 1, comprenant : l'application de la composition thermo-conductrice par distribution, marquage au pochoir, rotogravure par sérigraphie ou impression flexographique sur un substrat et durcissement et/ou séchage de ladite composition.

10. Dispositif électronique comprenant la composition thermo-conductrice selon la revendication 1.

11. Dispositif électronique comprenant un composant générateur de chaleur, une matrice à froid et la composition thermo-conductrice selon la revendication 1.
